# EUROPÄISCHE PATENTSCHRIFT

(11) **EP 1 837 535 B1**
(45) Veröffentlichungstag und Bekanntmachung des Hinweises auf die Patenterteilung: **28.10.2009**
(21) Anmeldenummer: 07005330.1
(22) Anmeldetag: 15.03.2007
(51) Int. Cl.: F16C 19/38, F16C 43/04, F16H 57/02

(54) **Lageranordnung**
Bearing arrangement
Ensemble de palier

(30) Priorität: 22.03.2006 DE 102006013079
(43) Veröffentlichungstag der Anmeldung: 26.09.2007
(73) Patentinhaber: AB SKF, 415 50 Göteborg (SE)
(72) Erfinder: Harich, Roland, 97633 Höchheim (DE); Göbel, Werner, 97490 Poppenhausen (DE)
(74) Vertreter: Kohl, Thomas

(56) Entgegenhaltungen:
- GB-A- 2 073 332
- GB-A- 2 166 204
- US-A1- 2003 236 148

## Beschreibung

Die Erfindung betrifft eine Lageranordnung, die auf einem Wellenelement drehbar gelagert ist, wobei die Lageranordnung zwei sich im axialen Abstand zueinander befindliche Kegelrollenlager aufweist, wobei die Lageranordnung ein Zahnrad eines Getriebes umfasst und wobei die beiden radial äußeren Laufbahnen der Kegelrollenlager in das Zahnrad eingearbeitet sind.

Eine Lageranordnung dieser Art ist aus der US 2003/0236148 A1 bekannt. Vorgesehen ist hier, dass der einteilige Lageraußenring eines zweireihigen Kegelrollenlagers direkt die Laufbahnen der beiden Kegelrollensitze aufweist, wobei der Lageraußenring selber als Zahnrad ausgeführt ist.

Die DE 203 14 660 U1 offenbart ein Maschinenteil zur Lagerung des Rotors einer Windkraftanlage, wofür zwei Kegelrollenlager eingesetzt werden. Diese sind in X-Anordnung konfiguriert, woraus sich Vorteile ergeben, die in dem genannten Dokument näher beschrieben sind. Vor allem kann das Eingangsdrehmoment der Windkraftanlage über einen einteiligen Lagerinnenring übertragen werden, wodurch die Anflanschung des Rotors direkt an den Lagerinnenring einfach zu bewerkstelligen ist.

In allgemeiner Weise beschreibt auch die GB 2 166 204 A ein zweireihiges Kegelrollenlager, wobei eine X-Anordnung der Kegelrollen vorgesehen ist. Der Außenring des zweireihigen Kegelrollenlagers ist hier einteilig ausgebildet, was es erforderlich macht, beim Zusammenbau des Lagers in einer besonderen und dort näher spezifizierten Weise vorzugehen. Hierfür ist ein segmentierter Distanzring vorgesehen, der kurz vor der Fertigstellung des Zusammenbaus axial zwischen die beiden Innenringe der beiden Kegelrollenlager eingefügt wird.

Eine ähnliche Lösung zeigt auch die GB 2 073 332 A, die statt eines segmentierten Distanzrings andere Möglichkeiten aufzeigt, wie zum Abschluss des Zusammenbaus die beiden Innenringe der beiden Kegelrollenlager auf axialen Abstand gebracht und dort gehalten werden können.

Bei Windkraftanlagen ist es gebräuchlich und bekannt, ein Planetengetriebe zur Drehmomentübertragung vom Rotor zum Generator einzusetzen. Sofern zum Lagern von Getriebekomponenten Kegelrollenlager eingesetzt werden, erfolgt dies jedoch stets in O-Anordnung. Die X-Anordnung ist bislang nicht ins Auge gefasst worden, da dies insbesondere montagetechnisch und auch mit Blick auf den zur Verfügung stehenden Bauraum problematisch ist.

Der Erfindung liegt daher die **Aufgabe** zugrunde, eine Bauteil der eingangs genannten Art so fortzubilden, dass die vorbekannte Lösung für weitere Einsatzbereiche, insbesondere bei Windkraflanlagen, genutzt werden kann, ohne in Probleme hinsichtlich des Zusammenbaus bzw. der Montage und des Bauraums zu geraten.

Die **Lösung** dieser Aufgabe durch die Erfindung ist dadurch gekennzeichnet, dass die beiden Kegelrollenlager in X-Anordnung positioniert sind, wobei an mindestens einer Stirnseite mindestens eines Innenrings eines der Kegelrollenlager eine sich in axialer Richtung erstreckende Gewindebohrung zum Einschrauben von Montage-Hilfsstiften eingebracht ist.

Durch diese Ausgestaltung wird es möglich, eine stabile radiale und axiale Lagerung des Zahnrads auf einem Wellenelement zu realisieren, wobei eine raumsparende Anordnung erreicht wird. Durch die Integration der Laufbahnen direkt in das Zahnrad ergibt sich grundsätzlich ein geringerer Bauraum im Verhältnis zu der Lösung, die separate Lagerringe vorsieht. Auch ist es in problemloser Weise möglich, die Einheit bestehend aus zweireihiger Kegelrollenlageranordnung und Zahnrad zu montieren.

Bevorzugt ist das Zahnrad ein Planetenrad und das Wellenelement ein Planetenträger eines Planetengetriebes. Besonders bevorzugt ist vorgesehen, dass das Planetengetriebe Teil einer Windturbine ist.

Die Montierbarkeit der Anordnung wird erleichtert, wenn zwischen dem Innenring des einen Kegelrollenlagers und dem Innenring des anderen Kegelrollenlagers ein Distanzring angeordnet ist; hierbei ist bevorzugt vorgesehen, dass der Distanzring in Umfangsrichtung segmentiert ausgebildet ist.

Die Einstellung eines gewünschten Lagerspiels wird wesentlich erleichtert, wenn der Distanzring Bestandteil einer Gruppe verschiedener Distanzringe mit abgestaffelt unterschiedlicher Breite ist. Die Abstaffelung der Breite kann dabei in Sprüngen einiger Mikrometer erfolgen.

An mindestens einer Stirnseite mindestens eines Innenrings eines der Kegelrollenlager kann eine sich in axiale Richtung erstreckende Gewindebohrung eingebracht sein. Hierdurch wird es möglich, ein Montageelement in die Gewindebohrung einzuschrauben und damit den Innenring gezielt bei der Montage zu manipulieren. Der Vereinfachung der Montage dient auch die weiterbildungsgemäße Lösung, wonach vorgesehen ist, dass in den Innenring mindestens eines der Kegelrollenlager eine in Umfangsrichtung verlaufende Ringnut eingebracht ist. In diese Ringnut kann ein Sprengring eingelegt werden, um vormontierte Kegelrollen in einer gewünschten Lage während des weiteren Montagevorgangs zu halten. Die Ringnut kann dabei nahe der nach außen gewandten Stirnseite des Innenrings angeordnet sein.

Eine sehr stabile Lagerung wird erzielt, wenn weiter vorgesehen wird, dass die Summe der axialen Breite der beiden radial äußeren Laufbahnen mindestens 50 %, vorzugsweise mindestens 60 %, der Breite des Zahnrades beträgt.

Insgesamt ergibt sich damit eine stabile Lagerung des Zahnrads relativ zu seinem Wellenelement, wobei dieser Vorteil besonders im Planetengetriebe einer Windkraftanlage genutzt werden kann.

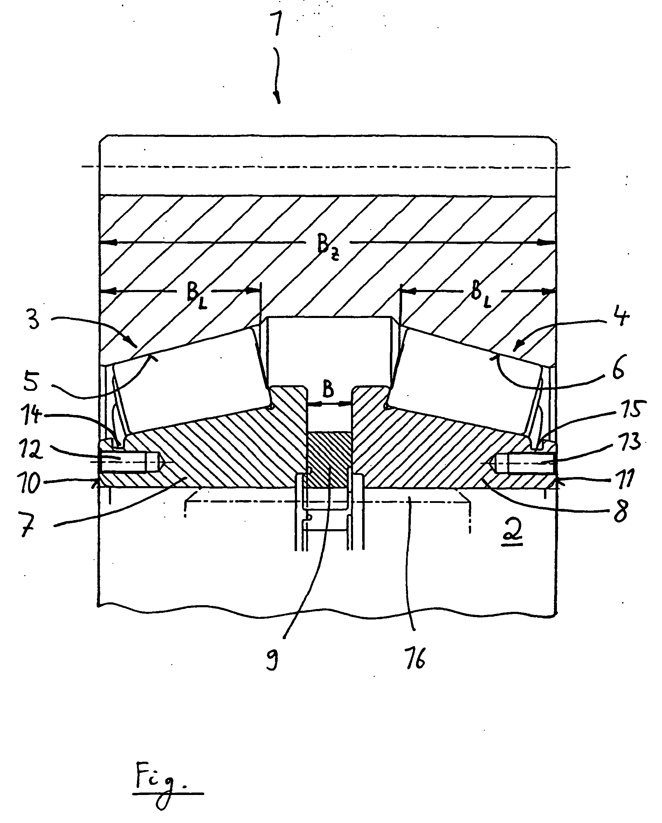

In der Zeichnung ist ein Ausführungsbeispiel der Erfindung dargestellt. Die einzige Figur zeigt den Schnitt durch ein Planetenrad eines Planetengetriebes einer Windkraftanlage.

In der Figur ist ein Maschinenteil 1 in Form eines Zahnrads zu erkennen, wobei das Zahnrad 1 relativ zu einem nicht näher dargestellten Wellenelement 2 radial und axial zu lagern ist. Bei dem Zahnrad 1 handelt es sich um das Planetenrad eines Planetengetriebes; dem entsprechend ist das Wellenelement 2 der Planetenträger des Planetengetriebes. Die Lagerung des Zahnrads 1 relativ zum Planetenträger 2 erfolgt mittels eines zweireihigen Kegelrollenlagers, d. h. mittels zweier Kegelrollenlager 3 und 4. Beide Kegelrollenlager 3, 4 haben jeweilige Innenringe 7 und 8. Die Außenringe der beiden Kegelrollenlager 3, 4 werden jedoch durch das Zahnrad 1 selber verwirklicht, d. h. die Außenringlaufbahnen 5 und 6 (also die radial äußeren Laufbahnen der Kegelrollenlager) sind direkt in das Zahnrad 1 eingearbeitet.

Das zweireihige Kegelrollenlager ist - wie aus der Figur sofort entnommen werden kann - in X-Anordnung konfiguriert. Im Stand der Technik sind für den vorliegenden Anwendungsfall nur O-Anordnungen bekannt und gebräuchlich.

Die Vorspannung im zweireihigen Kegelrollenlager wird durch einen Distanzring 9 definiert, dessen Breite B folglich genau an die benötigten Gegebenheiten und an das gewünschte Lagerspiel bzw. die gewünschte Lagervorspannung angepasst ist. Nicht näher zu erkennen ist, dass der Distanzring 9 in Umfangsrichtung segmentiert ist. Diesbezüglich wird auf die GB 2 166 204 A hingewiesen.

Aus diesem Dokument und auch aus der GB 2 073 332 A gehen detaillierte Hinweise darauf hervor, wie beim Zusammenbau bzw. bei der Montage eines gegenständlichen zweireihigen Kegelrollenlagers vorgegangen werden kann. Die dort beschriebene Vorgehensweise ist vollständig auch bei der erfindungsgemäßen Lösung anwendbar.

Die Montage wird vereinfacht durch Gewindebohrungen 12 und 13, von denen mehrere über den Umfang verteilt an den beiden Stirnseiten 10 und 11 der Innenringe 7 und 8 angeordnet sein können. Ebenfalls dienen die Ringnuten 14 und 15 der Erleichterung der Montage, denn in diese kann bei Bedarf ein Sprengring eingesetzt werden. Die Ringnuten 14, 15 sind dabei nahe der Stirnseite 10, 11 angeordnet.

Die Stabilität des montierten Verbundes, bestehend aus Zahnrad 1 und den beiden Kegelrollenlagern 3 und 4 wird wesentlich durch den kompakten Aufbau begünstigt. Hierunter ist zu verstehen, dass die Summe der axialen Breite B_{L} der beiden radial äußeren Laufbahnen 5 und 6 mindestens 50 % der Breite B_{Z} des Zahnrades 1 beträgt.

Bei der Montage der Anordnung wird zunächst ein Innenring 7, 8 eines Kegelrollenlagers 3, 4 in das Zahnrad 1 eingelegt, wobei beide Teile von einem Montageblock gehalten werden. Dann werden die Kegelrollen in den sich zwischen Außenringlaufbahn und Innenring ergebenden Spalt eingefüllt. Durch Hilfsstifte, die in die Gewindebohrungen 12, 13 eingeschraubt werden, kann der Innenring 7, 8 an der Stirnseite 10, 11 angehoben werden, bis es möglich ist, einen Sprengring in die Ringnut 14, 15 einzulegen. Der Sprengring erfüllt eine Haltefunktion für die Kegelrollen beim Wenden bzw. Drehen der teilmontierten Einheit.

Die gesamte Einheit wird dann gewendet und der zweite Innenring 7, 8 eingelegt, wobei dieser stirnseitig auf dem bereits montierten Innenring zu liegen kommt.

Hierdurch ergibt sich ein relativ großer Spalt zwischen zweitem Innenring und zweiter Außenringlaufbahn, wodurch es möglich ist, die Kegelrollen der zweiten Reihe einzufüllen.

Ist dies geschehen, kann der zweite Innenring mittels in die Gewindebohrungen stirnseitig in den Innenring eingeschraubten Hilfsstiften angehoben werden, so dass beide Innenringe bereits im wesentlichen ihre axiale Endposition haben. Durch Drehen der Lageranordnung setzen sich die Wälzkörper, d. h. die Kegelrollen laufen an den entsprechenden Borden an.

Dann wird der genaue axiale Abstand zwischen den beiden Innenringen 7, 8 gemessen, der später durch den Distanzring 9 ausgefüllt wird. Gemäß den gemessenen Werten wird ein segmentierter Distanzring 9 geeigneter Breite B ausgewählt und dessen einzelne Segmente eingesetzt, indem diese radial von innen in den Spalt zwischen den beiden Innenringen 7, 8 eingeschoben werden.

Mittels der in die Gewindebohrungen eingeschraubten Hilfsstifte kann gegebenenfalls auch, unter Aufbringung einer zusätzlichen Last, eine Vorspannung im Lager erzeugt werden. Diese Vorspannung liegt dann nach Abschluss des Montagevorgangs in der montierten Einheit vor.

Abschließend kann eine Montagehülse 16 (in der Figur strichpunktiert angedeutet) in die Bohrung der Innenringe 7, 8 eingeschoben werden. Die Montage ist damit abgeschlossen.

### Bezugszeichenliste

- 1: Lageranordnung
- 2: Wellenelement
- 3: Kegelrollenlager
- 4: Kegelrollenlager
- 5: radial äußere Laufbahn
- 6: radial äußere Laufbahn
- 7: Innenring
- 8: Innenring
- 9: Distanzring
- 10: Stirnseite
- 11: Stirnseite
- 12: Gewindebohrung
- 13: Gewindebohrung
- 14: Ringnut
- 15: Ringnut
- 16: Montagehülse

- B: Breite des Distanzrings
- B_{L}: axiale Breite der Laufbahn
- B_{Z}: Breite des Zahnrades

## Patentansprüche

1. Lageranordnung (1), die auf einem Wellenelement (2) drehbar gelagert ist, wobei die Lageranordnung zwei sich im axialen Abstand zueinander befindliche Kegelrollenlager (3, 4) aufweist, wobei die Lageranordnung (1) ein Zahnrad eines Getriebes umfasst und wobei die beiden radial äußeren Laufbahnen (5, 6) der Kegelrollenlager (3, 4) in das Zahnrad eingearbeitet sind,
**dadurch gekennzeichnet,**
**dass** die beiden Kegelrollenlager (3, 4) in X-Anordnung positioniert sind, wobei an mindestens einer Stirnseite (10, 11) mindestens eines Innenrings (7, 8) eines der Kegelrollenlager (3, 4) eine sich in axiale Richtung erstreckende Gewindebohrung (12, 13) zum Einschrauben von Montage-Hilfsstiften eingebracht ist.

2. Lageranordnung nach Anspruch 1, **dadurch gekennzeichnet, dass** das Zahnrad (1) ein Planetenrad und das Wellenelement (2) ein Planetenträger eines Planetengetriebes sind.

3. Lageranordnung nach Anspruch 2, **dadurch gekennzeichnet, dass** das Planetengetriebe Teil einer Windturbine ist.

4. Lageranordnung nach einem der Ansprüche 1 bis 3, **dadurch gekennzeichnet, dass** zwischen dem Innenring (7) des einen Kegelrollenlagers (3) und dem Innenring (8) des anderen Kegelrollenlagers (4) ein Distanzring (9) angeordnet ist.

5. Lageranordnung nach Anspruch 4, **dadurch gekennzeichnet, dass** der Distanzring (9) in Umfangsrichtung segmentiert ausgebildet ist.

6. Lageranordnung nach Anspruch 4 oder 5, **dadurch gekennzeichnet, dass** der Distanzring (9) Bestandteil einer Gruppe verschiedener Distanzringe mit abgestaffelt unterschiedlicher Breite (B) ist.

7. Lageranordnung nach einem der Ansprüche 1 bis 6, **dadurch gekennzeichnet, dass** in den Innenring (7, 8) mindestens eines der Kegelrollenlager (3, 4) eine in Umfangsrichtung verlaufende Ringnut (14, 15) eingebracht ist.

8. Lageranordnung nach Anspruch 7, **dadurch gekennzeichnet, dass** die Ringnut (14, 15) nahe der nach außen gewandten Stirnseite (10, 11) des Innenrings (7, 8) angeordnet ist.

9. Lageranordnung nach einem der Ansprüche 1 bis 8, **dadurch gekennzeichnet, dass** die Summe der axialen Breite (B_{L}) der beiden radial äußeren Laufbahnen (5, 6) mindestens 50 %, vorzugsweise mindestens 60 %, der Breite (B_{Z}) des Zahnrades (1) beträgt.

## Claims

1. Bearing arrangement (1) which is rotatably mounted on a shaft element (2), with the bearing arrangement having two tapered roller bearings (3, 4) which are situated with an axial spacing to one another, with the bearing arrangement (1) comprising a gearwheel of a transmission, and with the two radially outer raceways (5, 6) of the tapered roller bearings (3, 4) being formed into the gearwheel,
**characterized**
**in that** the two tapered roller bearings (3, 4) are positioned in an X arrangement, with an axially extending threaded bore (12, 13) for screwing in assembly aid pins being formed in at least one end side (10, 11) of at least one inner ring (7, 8) of one of the tapered roller bearings (3, 4).

2. Bearing arrangement according to Claim 1, **characterized in that** the gearwheel (1) is a planet gear, and the shaft element (2) is a planet carrier, of a planetary gear set.

3. Bearing arrangement according to Claim 2, **characterized in that** the planetary gear set is part of a wind turbine.

4. Bearing arrangement according to one of Claims 1 to 3, **characterized in that** a spacer ring (9) is arranged between the inner ring (7) of the one tapered roller bearing (3) and the inner ring (8) of the other tapered roller bearing (4).

5. Bearing arrangement according to Claim 4, **characterized in that** the spacer ring (9) is formed in segments in the circumferential direction.

6. Bearing arrangement according to Claim 4 or 5, **characterized in that** the spacer ring (9) is a constituent part of a group of different spacer rings with graduated different widths (B).

7. Bearing arrangement according to one of Claims 1 to 6, **characterized in that** an annular groove (14, 15) which runs in the circumferential direction is formed in the inner ring (7, 8) of at least one of the tapered roller bearings (3, 4).

8. Bearing arrangement according to Claim 7, **characterized in that** the annular groove (14, 15) is arranged close to the outward-facing end side (10, 11) of the inner ring (7, 8).

9. Bearing arrangement according to one of Claims 1 to 8, **characterized in that** the sum of the axial width (B_{L}) of the two radially outer raceways (5, 6) amounts to at least 50%, preferably at least 60%, of the width (B_{Z}) of the gearwheel (1).

## Revendications

1. Ensemble de palier (1), qui est monté à rotation sur un élément d'arbre (2), l'ensemble de palier présentant deux paliers à rouleaux coniques (3, 4) à distance axiale l'un de l'autre, l'ensemble de palier (1) comprenant une roue dentée d'un engrenage et les deux pistes de roulement (5, 6) radialement extérieures des paliers à rouleaux coniques (3, 4) étant incorporées dans la roue dentée,
**caractérisé en ce que**
les deux paliers à rouleaux coniques (3, 4) sont positionnés dans un agencement en X, un alésage fileté (12, 13) s'étendant dans la direction axiale étant pratiqué sur au moins un côté frontal (10, 11) d'au moins une bague intérieure (7, 8) de l'un des paliers à rouleaux coniques (3, 4) pour permettre d'y visser des goupilles auxiliaires de montage.

2. Ensemble de palier selon la revendication 1, **caractérisé en ce que** la roue dentée (1) est une roue planétaire et l'élément d'arbre (2) est un porte-satellites d'un engrenage planétaire.

3. Ensemble de palier selon la revendication 2, **caractérisé en ce que** l'engrenage planétaire fait partie d'une éolienne.

4. Ensemble de palier selon l'une quelconque des revendications 1 à 3, **caractérisé en ce que** l'on dispose entre la bague intérieure (7) de l'un des paliers à rouleaux coniques (3) et la bague intérieure (8) de l'autre palier à rouleaux coniques (4) une bague d'espacement (9).

5. Ensemble de palier selon la revendication 4, **caractérisé en ce que** la bague d'espacement (9) est réalisée sous forme segmentée dans la direction périphérique.

6. Ensemble de palier selon la revendication 4 ou 5, **caractérisé en ce que** la bague d'espacement (9) fait partie d'un groupe de différentes bagues d'espacement de largeurs différentes échelonnées (B).

7. Agencement de palier selon l'une quelconque des revendications 1 à 6, **caractérisé en ce que** dans la bague intérieure (7, 8) d'au moins l'un des paliers à rouleaux coniques (3, 4) est pratiquée une rainure annulaire (14, 15) s'étendant dans la direction périphérique.

8. Ensemble de palier selon la revendication 7, **caractérisé en ce que** la rainure annulaire (14, 15) est disposée à proximité du côté frontal (10, 11) tourné vers l'extérieur de la bague intérieure (7, 8).

9. Ensemble de palier selon l'une quelconque des revendications 1 à 8, **caractérisé en ce que** la somme de la largeur axiale (B_{L}) des deux pistes de roulement (5, 6) radialement extérieures vaut au moins 50%, de préférence au moins 60%, de la largeur (B_{z}) de la roue dentée (1).
